# EUROPEAN PATENT APPLICATION

(11) **EP 4 722 918 A2**
(43) Date of publication of application: **08.04.2026**
(21) Application number: 25225165.7
(22) Date of filing: 18.12.2025
(51) Int. Cl.: G06F 9/54

(54) **METHOD OF SHARING MEMORY ACROSS OPERATING SYSTEMS, APPARATUS, CIRCUIT, MEDIUM, AND DEVICE**

(30) Priority: 18.09.2025 CN 202511345161
(71) Applicant: XG TECH PTE. LTD., Singapore 179098 (SG)
(72) Inventor: LIN, Tao, 179098 Singapore (SG); YE, Chunchao, 179098 Singapore (SG)
(74) Representative: Casalonga

(57) **Abstract**

Embodiments of the present disclosure disclose a method of sharing memory cross operating systems, apparatus, a circuit, a medium, and a device. The method of sharing memory cross operating systems includes: determining a first dynamic buffer area in a first operating system according to a memory sharing message; determining an address identifier corresponding to the first dynamic buffer area; and sending the address identifier to a second operating system, wherein the first operating system and the second operating system are in a same integrated circuit.

## Description

### FIELD OF THE INVENTION

The present disclosure relates to data processing technologies, and in particular, to a method of sharing memory cross operating systems, apparatus, a circuit, a medium, and a device.

### BACKGROUND OF THE INVENTION

Memory sharing refers to a mechanism for sharing memory between different processes or applications, which is usually used to improve the efficiency and speed of data transmission. This mechanism allows different processes or applications to exchange data through a shared memory area without data replication through an operating system kernel, thereby reducing the delay and overhead of data transmission. In the prior art, there is no method for sharing memory cross operating systems.

### SUMMARY OF THE INVENTION

In order to solve the above technical problem, the present disclosure has been proposed. Embodiments of the present disclosure provide a method of sharing memory cross operating systems, apparatus, a circuit, a medium, and a device.

According to an aspect of the embodiments of the present disclosure, there is provided a method of sharing memory cross operating systems, including:
determining a first dynamic buffer area in a first operating system according to a memory sharing message;
determining an address identifier corresponding to the first dynamic buffer area; and
sending the address identifier to a second operating system, wherein the first operating system and the second operating system are in a same integrated circuit.

According to another aspect of the embodiments of the present disclosure, there is provided a method of sharing memory cross operating systems including a first operating system and a second operating system integrated on a same integrated circuit, the method comprising:
in response to triggering at least one memory sharing message by the first operating system and/or the second operating system,
controlling the first operating system to distributively execute the operations performed by the first operating system in the method according to any one of the foregoing embodiments according to the at least one memory sharing message, and/or, controlling the second operating system to distributively execute the operations performed by the first operating system in the method according to any one of the foregoing embodiments according to the at least one memory sharing message.

According to another aspect of the embodiments of the present disclosure, there is provided a cross-operating system memory sharing apparatus, including:
a buffer determination module configured to determine a first dynamic buffer area in a first operating system according to a memory sharing message;
an identifier determination module configured to determine an address identifier corresponding to the first dynamic buffer area; and
an identifier sending module configured to send the address identifier to a second operating system, wherein the first operating system and the second operating system are in a same integrated circuit.

According to another aspect of the embodiments of the present disclosure, there is provided an integrated circuit, including: a first operating system and a second operating system integrated in the integrated circuit;
the first operating system is configured to, in response to triggering at least one memory sharing message, distributively execute operations performed by the first operating system in the method according to any one of the foregoing embodiments according to the at least one memory sharing message; and
the second operating system is configured to, in response to triggering at least one memory sharing message, distributively execute operations performed by the first operating system in the method according to any one of the foregoing embodiments according to the at least one memory sharing message.

According to yet another aspect of the embodiments of the present disclosure, there is provided a computer-readable storage medium, storing a computer program, which is used to execute the method of sharing memory cross operating systems according to any one of the foregoing embodiments.

According to yet another aspect of an embodiment of the present disclosure, there is provided an electronic device, including:
a processor;
a memory for storing executable instructions of the processor;
the processor is configured to read the executable instructions from the memory and execute the instructions to implement the method of sharing a memory cross operating systems according to any one of the foregoing embodiments.

Based on the method of sharing memory cross operating systems, apparatus, the circuit, the medium, and the device provided by the foregoing embodiments of the present disclosure, a uniquely identified address identifier is determined for the first dynamic buffer area determined in the first operating system, which is used to point to the first dynamic buffer area, and the address identifier is sent to the second operating system located in the same integrated circuit as the first operating system, enabling the second operating system to directly access the first dynamic buffer area through the address identifier, thereby realizing memory sharing between two different operating systems, and solving the problem of memory sharing among multiple operating systems.

Hereinafter, the technical solution of the present disclosure will be further described in detail with reference to the accompanying drawings and embodiments.

### BRIEF DESCRIPTION OF THE DRAWINGS

The above and other objectives, features and advantages of the present disclosure will become more apparent by describing embodiments of the present disclosure in detail with reference to the accompanying drawings. The accompanying drawings, which are included to provide a further understanding of the embodiments of the present disclosure and constitute a part of this specification, illustrate the present disclosure together with the embodiments of the present disclosure, but do not limit the present disclosure. In the drawings, like reference numerals generally refer to like parts or steps.
FIG. la is a schematic structural diagram of an integrated circuit applying a method of sharing memory cross operating systems according to an exemplary embodiment of the present disclosure;
FIG. 1b is schematic structural diagram of an integrated circuit applying a method of sharing memory cross operating systems according to another exemplary embodiment of the present disclosure;
FIG. 2 is a schematic flowchart of a method of sharing memory cross operating systems according to an exemplary embodiment of the present disclosure;
FIG. 3 is a schematic flowchart of determining an address identifier in a method of sharing memory cross operating systems according to another exemplary embodiment of the present disclosure;
FIG. 4 is schematic flowchart of a method of sharing memory cross operating systems according to yet another exemplary embodiment of the present disclosure;
FIG. 5a is a schematic flowchart of accessing a buffer area in a method of sharing memory cross operating systems according to still another exemplary embodiment of the present disclosure;
FIG. 5b is a schematic flowchart of accessing a buffer area in a method of sharing memory cross operating systems according to yet still another exemplary embodiment of the present disclosure;
FIG. 6 is a schematic structural diagram of a cross-operating system memory sharing apparatus according to an exemplary embodiment of the present disclosure;
FIG. 7 is a schematic structural diagram of a cross-operating system memory sharing apparatus according to another exemplary embodiment of the present disclosure;
FIG. 8 is a schematic structural diagram of a cross-operating system memory sharing apparatus according to yet another exemplary embodiment of the present disclosure; and
FIG. 9 is a structural diagram showing an electronic device according to an example embodiment of the present disclosure.

### DETAILED DESCRIPTION OF THE EMBODIMENTS

In order to explain the present disclosure, example embodiments of the present disclosure will be described in detail below with reference to the accompanying drawings. It is apparent that the described embodiments are merely a part of the embodiments of the present disclosure, rather than all the embodiments. It should be understood that the present disclosure is not limited to the example embodiments described herein.

It should be noted that: the relative arrangement of components and steps, numerical expressions and numerical values set forth in these embodiments do not limit the scope of the present disclosure, unless specifically stated otherwise.

### Application Overview

In the process of implementing the present disclosure, it is recognized that a cockpit-driving integrated System on Chip (SoC) is a highly integrated chip specially designed for intelligent scenarios of smart cars, aiming to integrate the computing power requirements of the Intelligent Cockpit and Advanced Driver Assistance Systems/Autonomous Driving (ADAS/AD) into a single chip to achieve efficient reuse and collaboration of software and hardware resources. Traditional memory access (Direct Memory Access Buffer, DMA-Buf) framework, combined with Contiguous Memory Allocators (CMA heap) and other memory allocation strategies, enables DMA-Buf to realize the transfer and sharing of memory among multiple processes and multiple devices within an operating system. However, since the Intelligent Cockpit and ADAS/AD use different operating systems, for example, the Intelligent Cockpit uses the QNX operating system, and ADAS/AD uses the Linux operating system, it maynot solve the memory sharing problem among multiple operating systems.

### Exemplary System

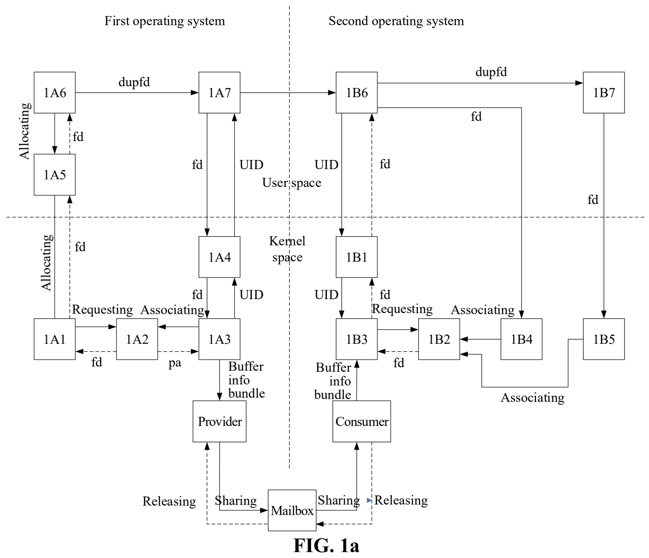

FIG. 1a is a schematic structural diagram of an integrated circuit applying a method of sharing memory cross operating systems according to an exemplary embodiment of the present disclosure. As shown in FIG. 1a, the integrated circuit includes at least a first operating system (OS A) and a second operating system (OS B).

The first operating system and the second operating system, each includes user space and kernel space. The user space refers to the memory area and execution environment used when an application runs, and the kernel space refers to a dedicated memory area and execution environment where the operating system kernel runs. The kernel space corresponds to the user space, both together constitute the core isolation architecture of the operating system.

The kernel space of the first operating system includes Contiguous Memory Allocator Heap (CMA Heap) 1A1, Direct Memory Access Buffer framework (DMA-Buf framework) 1A2, Provider Device 1A3, and Character Device (cdev) 1A4; the user space includes memory allocation library (libdmabufheap) 1A5, application (app) 1A6, and Provider application (Provider app) 1A7.

The contiguous memory allocator heap 1A1 is a special memory area based on the CMA mechanism, specifically used for allocating physically contiguous memory blocks, and mainly serving hardware devices (such as GPU, camera, video encoder, etc.) that requires Direct Memory Access (DMA). It is a common memory allocation source (Exporter) in the DMA-Buf framework, providing efficient support for cross-device sharing of contiguous memory.

Memory access framework 1A2 is a core mechanism in the Linux kernel for implementing efficient memory sharing across devices and processes, mainly solving the performance bottleneck problem during data sharing among different hardware devices (such as GPU, camera, display, etc.), and greatly improving system efficiency through a "zero-copy" technology.

The provider device 1A3 refers to a hardware device or a virtual device that may provide specific resources, services or functions.

The character device 1A4 is the core mechanism for managing and implementing character device drivers. The character device is one of the most common types of device in Linux, whose data is transmitted in the form of a character stream and usually accessed sequentially (such as keyboard, serial port, LED, sensor, etc.).

The memory allocation library 1A5 is a library used to manage and allocate Direct Memory Access Buffer (DMA-Buf), whose main function is to provide a unified interface for creating, allocating, and managing cross-device shareable DMA buffer areas (DMA-Buf). It simplifies the allocation process of DMA-Buf, especially suitable for scenarios requiring efficient memory sharing (such as multimedia processing, graphics rendering, etc.). The core goal of libdmabufheap is to provide a standardized DMA-Buf allocation interface for user space and kernel space.

The provider application 1A7 refers to an application program that specifically provides specific functions, data, or resources for other applications, services, or systems.

The kernel space of the second operating system includes a character device 1B1, a memory access framework 1B2, a Consumer Heap 1B3, a device driver 1B4, and other device drivers 1B5; the user space includes Consumer application (Consumer app) 1B6 and other applications (other apps) 1B7.

The consumer heap 1B3 is a description of the memory heap from the perspective of the consumer, which usually refers to the memory heap used by the importer driver or application program, and these memory heaps are provided by other components (such as Exporter/Provider) for receiving, processing, or sharing data.

The device driver 1B4, which is a bridge between the operating system and the hardware device, is a set of special programs that enable the operating system to recognize and control the hardware device. It is responsible for converting abstract instructions of the operating system into specific operations understandable by hardware, and at the same time feeding back the status and data of the hardware to the operating system.

Other device drivers 1B5 are dedicated device drivers designed for specific hardware or scenarios, which undertake unique functions in the system, such as graphics processor drivers, sensor drivers, USB device drivers, etc.

In addition, the integrated circuit provided in the present embodiment further includes a hardware Mailbox connecting the first operating system and the second operating system, and the hardware mailbox is used to implement asynchronous communication between the first operating system and the second operating system. It realizes message transmission through a predefined "mailbox" area (usually memory or dedicated hardware registers) without continuous polling, and is suitable for low-latency and low-power consumption scenarios.

When implementing the memory sharing method between the first operating system and the second operating system based on the above integrated circuit, first, when application 1A6 in the first operating system needs to share memory with an application in the second operating system, provider application 1A7 on the user space side triggers a memory sharing message to be sent to Consumer application (Consumer app) 1B6 of the second operating system, and application 1A6 sends an allocation request (allocate) to memory allocation library 1A5, and the memory allocation library 1A5 sends the allocation request to contiguous memory allocator heap 1A1. The contiguous memory allocator heap 1A1 requests shared memory (buffer) from the memory access framework 1A2 according to the allocation request, and the memory access framework 1A2 feeds back the file descriptor (fd) of the shared memory to be shared to the contiguous memory allocator heap 1A1. The contiguous memory allocator heap 1A1 feeds back the file descriptor to the memory allocation library 1A5, and the memory allocation library 1A5 feeds back the file descriptor to the application 1A6; the provider application 1A7 calls the duplicate file descriptor (dup fd) and sends the file descriptor to the character device 1A4, and the file descriptor is written into the provider device 1A3 via the character device 1A4, and is matched with the address of the shared memory in the provider device 1A3, to obtain the allocated UID. The character device 1A4 sends the address identifier (UID) to the provider application 1A7, and the provider application 1A7 transmits the address identifier (send UID) to the consumer application 1B6 in the second operating system to realize memory sharing at the user space level.

The provider device 1A3, as a device, connects to the shared memory provided by the memory access framework 1A2, obtains a Physical Address (PA) and an IO Virtual Address (IOVA) of the shared memory fed back by the memory access framework 1A2, assigns a unique address identifier (UID) to the shared memory, and sends the address identifier to the character device 1A4; the provider device 1A3 shares all key information of the shared memory to the hardware mailbox through a provider in the form of a buffer info bundle to realize memory sharing at the kernel space level.

After receiving the memory release information fed back by the consumer heap 1B3 through a consumer, the hardware mailbox feeds back the shared memory release information to the provider device 1A3 through the provider.

The hardware mailbox shares the buffer info bundle with the consumer in the second operating system. The consumer heap 1B3 receives the buffer info bundle sent by the Consumer, sends a request to the memory access framework 1B2, receives the file descriptor fed back by the memory access framework 1B2, and associates the file descriptor with the shared memory.

Consumer application 1B6 in the second operating system receives the address identifier transmitted by provider application 1A7 in the first operating system, sends the address identifier to the consumer heap 1B3 through the character device 1B1, and the consumer heap 1B3 determines a relationship between the address identifier and the file descriptor based on a relationship between the address identifier and the shared memory, and feeds back the file descriptor corresponding to the address identifier to the consumer application 1B6 through the character device 1B1.

The consumer application 1B6 sends the file descriptor to device driver 1B4, and through the device driver 1B4, the received file descriptor is associated with the file descriptor in the memory access framework 1B2 to store the data of the consumer application 1B6 in the shared memory of the first operating system. The consumer application 1B6 calls a duplicate file descriptor (dup fd) to another application 1B7 which sends the file descriptor to another device driver 1B5, through another device driver 1B5, the received file descriptor is associated with the file descriptor in the memory access framework 1B2 to realize storing the data of another application 1B7 in the shared memory of the first operating system.

A buffer info bundle is a collection of data structures that integrates all key information related to a shared memory buffer area (such as DMA-Buf), and is used to transfer and share metadata of the buffer area between different components (such as Exporter, Importer, and user space application). Its core function is to package the description information of the buffer area, avoid transmitting multiple independent parameters separately, and simplify the complexity of cross-component communication.

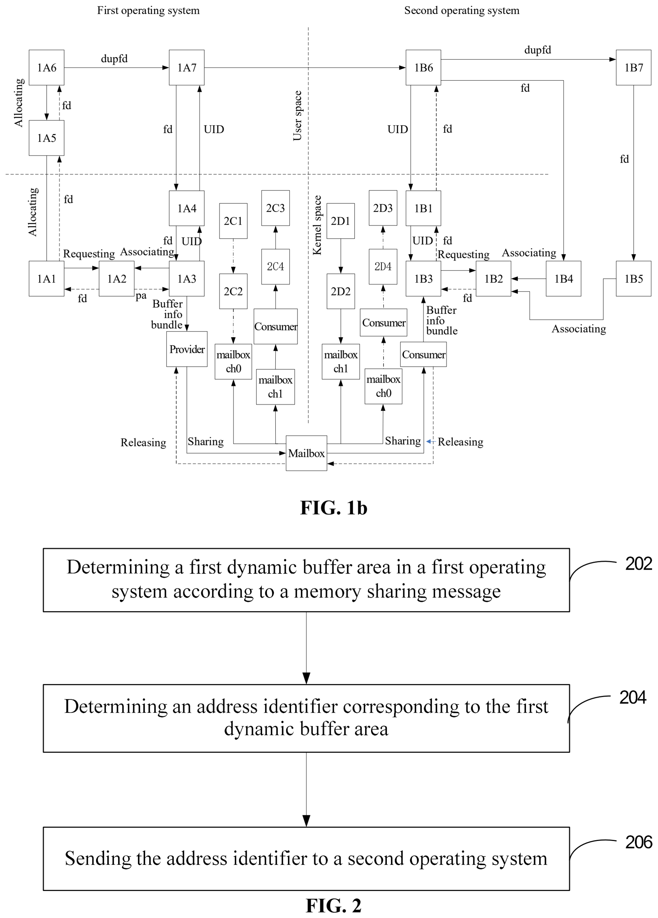

FIG. 1b is schematic structural diagram of an integrated circuit applying a method of sharing memory cross operating systems according to another exemplary embodiment of the present disclosure. As shown in FIG. 1b, the integrated circuit includes at least a first operating system (OS A) and a second operating system (OS B) integrated on the integrated circuit.

In the process of implementing memory sharing, the first operating system and the second operating system may trigger at least one memory sharing message at the same time, or the first operating system receives at least one memory sharing message and the second operating system triggers at least one memory sharing message; optionally, in response to triggering at least one memory sharing message by the first operating system and/or the second operating system, the first operating system is controlled to distributively execute the operations performed by the first operating system in the memory sharing process shown in FIG. la according to the at least one memory sharing message; and/or, the second operating system is controlled to distributively execute the operations performed by the first operating system in the memory sharing process shown in FIG. la according to the at least one memory sharing message.

The first operating system is configured to, in response to triggering at least one memory sharing message, distributively execute operations performed by the first operating system in the method according to any one of the following embodiments according to the at least one memory sharing message.

The second operating system is configured to, in response to triggering at least one memory sharing message, distributively execute operations performed by the first operating system in the method according to any one of the following embodiments according to the at least one memory sharing message.

The shared channels provided according to the present embodiment for the first operating system and the second operating system are different and do not affect each other. To highlight that the first operating system and the second operating system may perform distributed processing of multiple memory sharing messages, based on FIG. 1a, the embodiment provided in FIG. 1b is used to represent the distributed processing procedure, and the processing procedure for each memory sharing message is the same; for the convenience of display, a simplified representation of multiple memory sharing procedures is provided in FIG. 1b; when at least one memory sharing is performed between the first operating system and the second operating system, the mailbox provides an independent mailbox channel (e.g., mailbox ch0, mailbox chl, etc.) for each memory sharing process, through which sharing procedures of different services may be executed, so that data between different services do not interfere with each other; at this time, the first operating system serves not only as a provider but also as a consumer; the first operating system further includes: a first operating system provider character device (provider cdev os1) 2C1, a first operating system memory access provider (DMA-Buf provider os1) 2C2, a first operating system consumer character device (consumer cdev os1) 2C3, and a first operating system shared consumer heap (consumer heap os1) 2C4. Similar to the first operating system, the second operating system serves not only as a provider but also as a consumer; the second operating system further includes: a second operating system provider character device (provider cdev os2) 2D1, a second operating system memory access provider (DMA-Buf provider os2) 2D2, a second operating system consumer character device (consumer cdev os2) 2D3, and a second operating system shared consumer heap (consumer heap os2) 2D4.

The first operating system provider character device 2C1 and the second operating system provider character device 2D1 may be understood by referring to a character device 1A4, and will not be repeated here. The first operating system memory access provider 2C2 and the second operating system memory access provider 2D2 may be understood by referring to a provider device 1A3, and will not be repeated here. The first operating system consumer character device 2C3 and the second operating system consumer character device 2D3 may be understood by referring to the character device 1B1, and will not be repeated here. The first operating system shared consumer heap 2C4 and the second operating system shared consumer heap 2D4 may be understood with reference to a consumer heap 1B3, and will not be repeated here.

When implementing the distributed memory sharing method between the first operating system and the second operating system based on the above integrated circuit, the first operating system and the second operating system simultaneously trigger a memory sharing message (for example, the first operating system and the second operating system respectively obtain a frame of image); the first operating system provider character device 2C1 in the first operating system writes the requested file descriptor into the first operating system memory access provider 2C2, and the first operating system memory access provider 2C2 matches the file descriptor with the address of the shared memory to obtain the allocated DID 0. DID 0 is sent to the consumer in the second operating system through a mailbox channel 0 (mailbox ch0) provided by the mailbox; the consumer of the second operating system receives DID 0, and the shared consumer heap 2D4 of the second operating system determines a relationship between the address identifier and the file descriptor based on a relationship between UID 0 and the shared memory, and sends the file descriptor corresponding to the address identifier UID 0 to the second operating system consumer character device 2D3. In the second operating system, the second operating system provider character device 2D1 writes the requested file descriptor into the second operating system memory access provider 2D2, and the second operating system memory access provider 2D2 matches the file descriptor with the address of the shared memory to obtain an allocated UID 1. UID 1 is sent to the consumer in the first operating system through the mailbox channel 1 (mailbox ch1) provided by the mailbox; the consumer of the first operating system receives DID 1, the first operating system shared consumer heap 2C4 determines a relationship between the address identifier and the file descriptor based on the relationship between DID 1 and the shared memory, and sends the file descriptor corresponding to the address identifier UID 1 to the first operating system consumer character device 2C3.

The execution processes of the first operating system and the second operating system are independent of each other and do not affect each other, thereby realizing distributed memory sharing.

### Exemplary Method

FIG. 2 is a schematic flowchart of a method of sharing memory cross operating systems according to an exemplary embodiment of the present disclosure. The present embodiment may be applied to an electronic device, as shown in FIG. 2, and includes the following steps:
202, Determining a first dynamic buffer area in a first operating system according to a memory sharing message.

The first operating system may be any operating system, for example, an intelligent cockpit system or an intelligent driving system; after triggering a memory sharing message, a shared memory (buffer) is applied for in the DMA-Buf of the first operating system as the first dynamic buffer area; optionally, the opportunity to trigger the memory sharing message may be that any application in the first operating system generates new data or obtains new data (for example, capturing one frame of image or playing one video, etc.).

Step 204, Determining an address identifier corresponding to the first dynamic buffer area.

In an embodiment, the address identifier may be a unique User Identification (UID) identifying the first dynamic buffer area; different buffer areas are distinguished by address identifiers, and the address identifier may be determined by a counter, for example, different address identifiers are assigned to different buffer areas in the form of natural number increment.

Step 206, Sending the address identifier to a second operating system.

The first operating system and the second operating system are in a same integrated circuit.

Optionally, the integrated circuit in the present embodiment may be a system-on-chip for cockpit-driving integration, etc.; the second operating system is an operating system different from the first operating system in the integrated circuit, for example, the first operating system is an intelligent cockpit system, while the second operating system is an intelligent driving system; or, the first operating system is an intelligent driving system, while the second operating system is an intelligent cockpit system. By sending the address identifier to the second operating system, an application in the second operating system may find the first dynamic buffer area through the address identifier to obtain the data stored in the first dynamic buffer area, and the second operating system may call the first dynamic buffer area like calling the DMA-Buf in the second operating system.

The method of sharing memory cross operating systems provided by the embodiment of the present disclosure determines a uniquely identified address identifier for the first dynamic buffer area determined in the first operating system, which is used to point to the first dynamic buffer area, and sends the address identifier to the second operating system located in the same integrated circuit as the first operating system, so that the second operating system may directly access the first dynamic buffer area through the address identifier, thereby realizing memory sharing between two different operating systems and solving the problem of memory sharing among multiple operating systems.

In some alternative embodiments, step 202 may include:
in response to triggering the memory sharing message, determining the first dynamic buffer area by applying for a buffer area from a shared memory framework according to the memory sharing message.

In the present embodiment, the memory sharing message may be triggered by any application in the first operating system. As shown in FIG. 1, the application sends an allocation request (allocate) to a memory allocation library 1A5, and the memory allocation library 1A5 sends the allocation request to a contiguous memory allocator heap 1A1, and the contiguous memory allocator heap 1A1 requests a shared memory (buffer) from a memory access framework 1A2 according to the allocation request to determine the first dynamic buffer area, which is any free space in the memory access framework. Optionally, after any application in the first operating system triggers a memory sharing message, the memory sharing message may be sent to the second operating system in user space, and a feedback acknowledgment message from the second operating system is received to determine that the application in the second operating system may access the first dynamic buffer area.

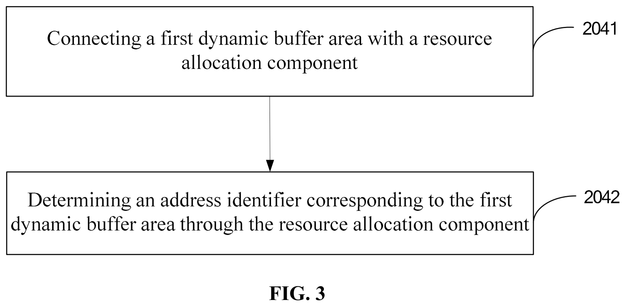

FIG. 3 is a schematic flowchart of determining an address identifier in a method of sharing memory cross operating systems according to another exemplary embodiment of the present disclosure. As shown in FIG. 3, in the present embodiment, on the basis of any of the above embodiments, step 204 may include the following steps:
Step 2041, Connecting a first dynamic buffer area with a resource allocation component.

In the present embodiment, the resource allocation component may be a provider device 1A3 in the embodiment as shown in FIG. 1. Optionally, the first dynamic buffer area has a corresponding file descriptor, which is used to identify objects such as files, devices, or other data sources opened by a process, and each opened file or device has a unique file descriptor corresponding thereto. The first dynamic buffer area may be connected with the resource allocation component by the file descriptor. Optionally, the file descriptor of the first dynamic buffer area is written into the resource allocation component; the resource allocation component is connected with the first dynamic buffer area according to the file descriptor.

The file descriptor (fd) is used to identify objects such as files, devices, or other data sources that have been opened by a process, and each opened file or device has a unique file descriptor corresponding thereto. In the present embodiment, after obtaining the file descriptor, the resource allocation component may connect to the corresponding first dynamic buffer area according to the file descriptor, so that the resource allocation component may provide data storage services by directly using the first dynamic buffer area.

Step 2042, Determining an address identifier corresponding to the first dynamic buffer area by the resource allocation component.

In the present embodiment, the address identifier may be determined through processing based on attribute information corresponding to the first dynamic buffer area, or determined according to a preset rule (for example, natural number increment, etc.); the address identifier determined by the resource allocation component may be used by other applications to call the first dynamic buffer area, thereby improving the buffer matching efficiency by the address identifier.

Optionally, in some optional examples, Step 2042 may include:
Step a1, Acquiring a physical address and a virtual address of the first dynamic buffer area by the resource allocation component.

The buffer area is a memory area used for temporarily storing data, which has two identifiers of a physical address and a virtual address which both correspond to the same physical memory but have different uses, jointly supporting efficient memory management and secure access. The physical address is the actual hardware address of memory hardware (such as DRAM chips), directly corresponding to the memory cell in the memory chip, and is the unique identifier for the CPU to access physical memory through the address bus (usually a string of binary numbers, for example, ranges from0 to 2³²-1 in a 32-bit system); the virtual address is a "logical address" seen by the program (process or kernel), mapped to the physical address by the CPU's Memory Management Unit (MMU) through the page table. Virtual addresses are used in all memory operations in the program (such as variable access, buffer reading and writing), rather than directly operating on physical addresses.

Step a2, Determining the address identifier corresponding to the physical address and the virtual address of the first dynamic buffer area by a counter.

Optionally, the address identifier is determined by the counter according to an allocation order of the physical addresses and the virtual addresses, and the address identifier may be represented by any data representation method, such as binary numbers, etc. For example, in an example, when determining the address identifier for the first dynamic buffer area for the first time, the address identifier may be sequentially determined as 0001 (represented by a 4-bit binary number); determining the address identifier by the counter enables rapid address identifier allocation, and due to the accumulation function of the counter, ensuring that address identifiers corresponding to different physical addresses and virtual addresses are different. In addition, to ensure that the correspondence between the address identifier and the physical address and the virtual address is queryable, the correspondence between the address identifier and the physical address and the virtual address may be stored through a pre-stored table; optionally, sorting the correspondence in the pre-stored table according to the order of address identifiers, so that when physical address and virtual address need to be called, the corresponding physical address and virtual address may be determined by directly looking up the table based on the address identifier.

Optionally, in some optional examples, Step 2042 may include:
Step b1, Acquiring the physical address and the virtual address of the first dynamic buffer area by the resource allocation component.

In the present embodiment, the method for acquiring the physical address and the virtual address is the same as that in the above embodiment, and will not be repeated here.

Step b2, Determining the address identifier through at least one calculation based on the physical address and/or the virtual address.

In the present embodiment, since the physical addresses and the virtual addresses corresponding to respective buffer areas are different, an address identifier uniquely corresponding to the physical address and the virtual address may be obtained by performing a preset calculation method on at least one of the physical address and the virtual address; the calculation method may be any existing encoding method, such as MD5 code, etc. The address identifier determined by calculating the physical address and/or the virtual address has a closer association with the physical address and the virtual address; and since the physical addresses and the virtual addresses corresponding to different buffer areas are necessarily different, thus ensuring that the obtained address identifier may uniquely represent the physical address and the virtual address. For example, in an example, the physical address (32-bit) is: 0x7F8A2B1C; MD5 encoding is performed on this physical address to obtain an address identifier: 7a3c8a7d3e5f2b9cld0e8f7a6b5c4d3, and the two have a unique correspondence.

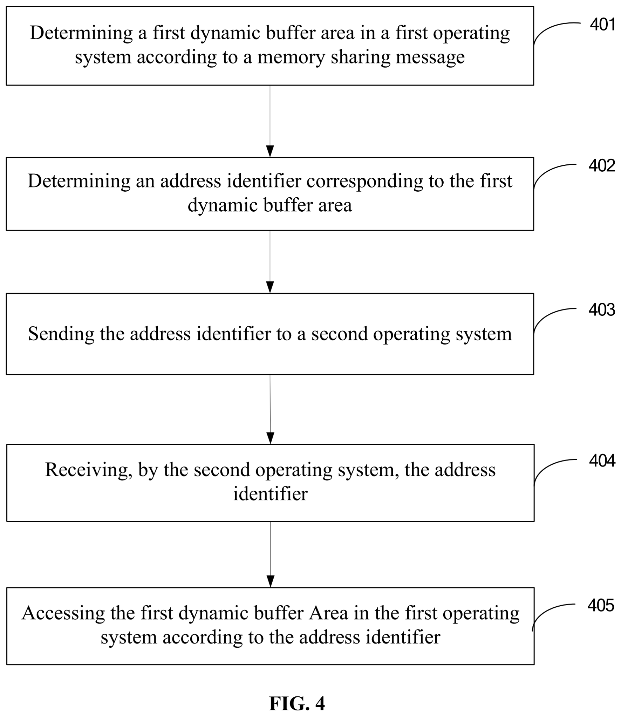

Since the embodiment of the present disclosure provides a method for implementing memory sharing between the first operating system and the second operating system, in the above embodiment, the address identifier of the first dynamic buffer area available for sharing in the first operating system is determined, and the address identifier uniquely identifying the first dynamic buffer area is sent to the second operating system; thus, FIG. 4 is schematic flowchart of a method of sharing memory cross operating systems according to yet another exemplary embodiment of the present disclosure.

Step 401, Determining a first dynamic buffer area in a first operating system according to a memory sharing message.

The implementation and technical effect of this step in the present embodiment are the same as those of Step 202 in the above embodiment, and will not be repeated here.

Step 402, Determining an address identifier corresponding to the first dynamic buffer area.

The implementation and technical effect of this step in the present embodiment are the same as those of Step 204 in the above embodiment, and will not be repeated here.

Step 403, Sending the address identifier to a second operating system.

The implementation and technical effect of this step in the present embodiment are the same as those of Step 206 in the above embodiment, and will not be repeated here.

Step 404, Receiving, by the second operating system, the address identifier.

In the present embodiment, as shown in FIG. 1, the transmission of the address identifier between the operating systems is implemented in user space and kernel space respectively: in the user space, the address identifier is sent to the consumer application of the second operating system through the provider application of the first operating system; in the kernel space, a channel between the first operating system and the second operating system is established through a hardware mailbox, enabling the second operating system to obtain the address identifier of the first dynamic buffer area through the channel, thereby realizing cross-system propagation of the address identifier.

Step 405, Accessing the first dynamic buffer area in the first operating system according to the address identifier.

In the present embodiment, after the second operating system obtains the address identifier, when the storage space in the second operating system is insufficient (for example, when any application in the second operating system generates data to be stored (for example, cache data, log data, etc.)), it needs to access the first dynamic buffer area in the first operating system according to the address identifier, and store the data to be stored in the first dynamic buffer area, thereby realizing cross-operating system memory sharing and data storage; through cross-system memory sharing, the problem that the overall system cannot run due to insufficient memory of one operating system in the same integrated circuit is solved.

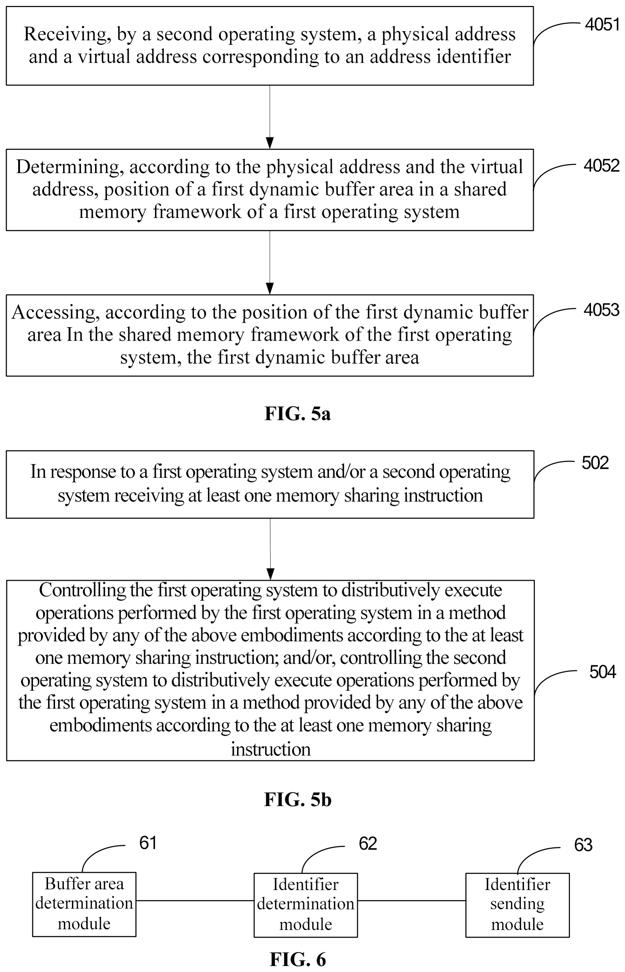

FIG. 5a is a schematic flowchart of buffer access in a method of sharing memory cross operating systems according to still another exemplary embodiment of the present disclosure. As shown in FIG. 5a, in the present embodiment, on the basis of the above embodiment, step 405 may include:
Step 4051, Receiving, by a second operating system, a physical address and a virtual address corresponding to an address identifier.

It may be known from the above embodiment that each physical address and virtual address has a uniquely corresponding address identifier; thus, after acquiring the address identifier, the corresponding physical address and virtual address may be determined according to the address identifier. For example, if the address identifier is obtained through MDS encoding, the physical address and the virtual address may be obtained by decoding the address identifier through an MDS decoding method (if only the physical address or the virtual address is obtained, since the physical address and the virtual address are in one-to-one correspondence, the corresponding virtual address may be determined according to the physical address, or the corresponding physical address may be determined according to the virtual address); for another example: if the address identifier is allocated through a counter, the physical address and the virtual address corresponding to the address identifier may be determined by querying a pre-stored table storing the correspondence between the address identifier and the physical address and the virtual address.

Step 4052, Determining, according to the physical address and the virtual address, position of a first dynamic buffer area in a shared memory framework of a first operating system.

Optionally, the shared memory framework may be the memory access framework shown in FIG. 1, and the physical address and the virtual address correspond to the first dynamic buffer area at the physical level and logical level, respectively; optionally, the corresponding buffer area may be found through the physical address and the corresponding buffer area may be found through the virtual address respectively; the two buffer areas are compared, and when matched, the buffer area is determined to be the first dynamic buffer area, that is, the position of the memory in the shared memory framework where data may be stored is determined (for example, a space with physical addresses from 00000000 to 00010010).

Step 4053, Accessing the first dynamic buffer area according to the position of the first dynamic buffer area in the shared memory framework of the first operating system.

In the present embodiment, after determining the position of the first dynamic buffer area where data may be buffered, the first dynamic buffer area may be accessed through position query, to store data to be stored by at least one consumer application in the second operating system in the first dynamic buffer area, thereby improving the accuracy of buffer area access through position relationship correspondence.

In other optional embodiments, after establishing a memory sharing channel between the second operating system and the first operating system based on the above embodiment, in addition to storing data to be stored in the first dynamic buffer area, the application in the second operating system may also read data in the first dynamic buffer area, and the use of the first dynamic buffer area is the same as that of the shared memory framework in the second operating system. Optionally, step 405 may further include: in response to a preset application in the second operating system requesting to call buffered data in the first operating system; and accessing the first dynamic buffer area according to the matching relationship between the received address identifier and the address identifier corresponding to the first dynamic buffer area, to read the buffered data stored in the first dynamic buffer area.

In the present embodiment, the preset application in the second operating system (for example, the consumer application, other applications, etc. as shown in FIG. 1) shares the address identifier received from the first operating system to the resource allocation component of the first operating system through the character device and the consumer heap to match the address identifier with the address identifier corresponding to the first dynamic buffer area requested and obtained in the resource allocation component. When the two match, it indicates that there is no problem with the transmission process of the address identifier, and the application in the second operating system may successfully read the buffered data in the first dynamic buffer area according to the address identifier, thereby realizing cross-system data reading.

FIG. 5b is a schematic flowchart of buffer access in a method of sharing memory cross operating systems according to yet still another exemplary embodiment of the present disclosure. The memory sharing method provided in the present embodiment is applied to the first operating system and the second operating system integrated on the same integrated circuit. As shown in FIG. 5b, it includes the following steps:
Step 502, In response to the first operating system and/or the second operating system triggering at least one memory sharing message.
Step 504, Controlling the first operating system to distributively execute operations performed by the first operating system in a method provided by any of the above embodiments according to the at least one memory sharing message; and/or, controlling the second operating system to distributively execute operations performed by the first operating system in a method provided by any of the above embodiments according to the at least one memory sharing message.

Optionally, the specific process of the first operating system and/or the second operating system executing the memory sharing method may refer to any of the above embodiments, and will not be repeated here. The present embodiment performs memory sharing through different channels respectively, thereby realizing distributed memory sharing, enabling at least one memory sharing to be performed between two different operating systems at the same time, and improving the efficiency of memory sharing; in addition, different channels may be provided for different services to implement memory sharing, realizing dedicated communication, so that data between different services do not interfere with each other.

Any method of memory sharing cross-operating system provided by the embodiments of the present disclosure may be executed by any appropriate device with data processing capability, including but not limited to: terminal devices and servers, etc. Alternatively, any method of memory sharing cross-operating system provided in the embodiments of the present disclosure may be executed by a processor, for example, the processor executes any method of memory sharing cross-operating system mentioned in the embodiments of the present disclosure by calling corresponding instructions stored in the memory. It is not described hereafter in detail.

### Example apparatus

FIG. 6 is a schematic structural diagram of a cross-operating system memory sharing apparatus according to an exemplary embodiment of the present disclosure. As shown in FIG. 6, the apparatus provided in the present embodiment includes:
a buffer area determination module 61, configured to determine a first dynamic buffer area in a first operating system according to a memory sharing message;
an identifier determination module 62, configured to determine an address identifier corresponding to the first dynamic buffer area; and
an identifier sending module 63, configured to send the address identifier to the second operating system,

The first operating system and the second operating system are in a same integrated circuit.

The cross-operating system memory sharing apparatus provided by the embodiments of the present disclosure determines a uniquely identified address identifier for the first dynamic buffer area determined in the first operating system, which is used to point to the first dynamic buffer area, and send the address identifier to the second operating system located in the same integrated circuit as the first operating system, enabling the second operating system to directly access the first dynamic buffer area through the address identifier, thereby realizing memory sharing between two different operating systems, and solving the problem of memory sharing among multiple operating systems.

In some optional embodiments, the buffer area determination module 61 is specifically configured to, in response to triggering the memory sharing message, determine the first dynamic buffer area by applying for a buffer area from a shared memory framework according to the memory sharing message.

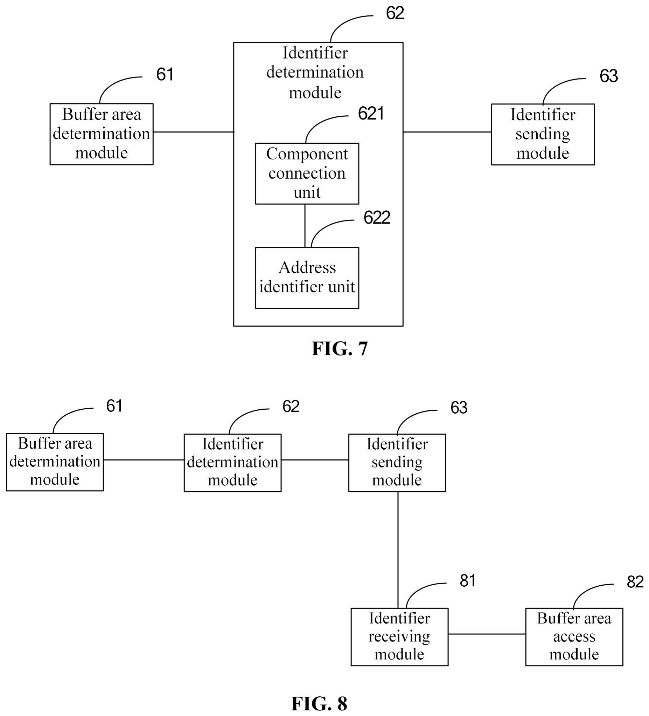

FIG. 7 is a schematic structural diagram of a cross-operating system memory sharing apparatus according to another exemplary embodiment of the present disclosure. As shown in FIG. 7, the identifier determination module 62 in the apparatus provided in the present embodiment includes:
a component connection unit 621 configured to connect a first dynamic buffer area with a resource allocation component; and
an address identifier unit 622 configured to determine an address identifier corresponding to the first dynamic buffer area by the resource allocation component.

Optionally, the component connection unit 621 is specifically configured to write the file descriptor of the first dynamic buffer area into the resource allocation component and connect the resource allocation component with the first dynamic buffer area according to the file descriptor.

In some optional examples, the address identifier unit 622 is specifically configured to acquire a physical address and a virtual address of the first dynamic buffer area by the resource allocation component, and determine the address identifier corresponding to the physical address and the virtual address in the first dynamic buffer area by a counter.

In other optional examples, the address identifier unit 622 is specifically configured to acquire the physical address and the virtual address of the first dynamic buffer area by the resource allocation component, and determine the address identifier through at least one calculation based on the physical address and/or the virtual address.

FIG. 8 is a schematic structural diagram of a cross-operating system memory sharing apparatus according to yet another exemplary embodiment of the present disclosure. As shown in FIG. 8, the apparatus provided in the present embodiment further includes:
an identifier receiving module 81 configured to control the second operating system to receive the address identifier; and
a buffer access module 82 configured to access the first dynamic buffer area in the first operating system according to the address identifier.

Optionally, the buffer access module 82 is specifically configured to receive, by a second operating system, a physical address and a virtual address corresponding to an address identifier; determine, according to the physical address and the virtual address, a position of a first dynamic buffer area in a shared memory framework of a first operating system; and access the first dynamic buffer area according to the position of the first dynamic buffer area in the shared memory framework of the first operating system.

Optionally, the buffer access module 82 is specifically configured to , in response to a preset application in the second operating system, request to call buffered data in the first operating system, and access the first dynamic buffer area according to the matching relationship between the received address identifier and the address identifier corresponding to the first dynamic buffer area, to read the buffered data stored in the first dynamic buffer area.

Advantageous technical effects corresponding to example embodiments of the apparatus may be seen in the respective advantageous technical effects of the above section described above and will not be described in detail here.

### Example electronic device

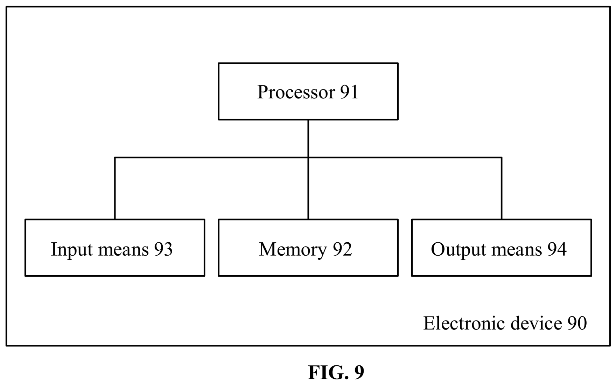

FIG. 9 is a structural diagram showing an electronic device including at least one processor 91 and memory 92 according to an embodiment of the present application.

The processor 91 may be a central processing unit (CPU) or other form of processing unit having data processing capabilities and/or instruction execution capabilities, and may control other components in the electronic device 90 to execute expected functions.

The memory 92 may include one or more computer program products, which may include various forms of computer-readable storage media, such as volatile memory and/or non-volatile memory. The volatile memory may for example include a random-access memory (RAM) and/or a cache memory (cache) etc. The non-volatile memory may include, for example, a read only memory (ROM), a hard disk, a flash memory, etc. One or more computer program instructions may be stored on a computer-readable storage medium, and the processor 91 may execute one or more computer program instructions to perform the method of sharing memory cross operating systems and/or other expected functions of the various embodiments of the present disclosure above.

In one example, the electronic device 90 may further include: input means 93 and output means 94, which are interconnected by a bus system and/or other form of connection mechanism (not shown).

The input means 93 may include, for example, a keyboard, a mouse, etc.

The output means 94 may output various information to the outside, which may include, for example, a display, a speaker, a printer, and a communication network and its connected remote output devices, etc.

Of course, for simplicity, only some of the components of the electronic device 90 relevant to the present application are shown in FIG. 9, omitting components such as buses, input/output interfaces, etc. In addition, the electronic device 90 may include any other suitable components depending on the particular application.

### Example computer program product and computer-readable storage medium

In addition to the methods and devices described above, embodiments of the present disclosure may also provide a computer program product including computer program instructions which, when executed by a processor, cause the processor to perform the steps of the method of sharing memory cross operating systems of various embodiments of the present disclosure described in the "Example Methods" section above.

The computer program product may include program code for performing operations of embodiments of the present application in any combination of one or more programming languages, including object-oriented programming languages, such as Java, C++, etc. and further including conventional procedural programming languages, such as the "C" language or similar programming languages. The program code may be executed entirely on a user computing device, partially on a user device, as a standalone software package, partially on a user computing device and partially on a remote computing device, or entirely on a remote computing device or server.

Furthermore, embodiments of the present disclosure may also be a computer-readable storage medium having stored thereon computer program instructions which, when executed by a processor, cause the processor to perform the steps of the method of sharing memory cross operating systems of the various embodiments of the present disclosure described in the "Example Methods" section above.

The computer-readable storage medium may take any combination of one or more readable media. A readable medium may be a readable signal medium or a readable storage medium. The readable storage medium for example but not limited to, an electronic, magnetic, optical, electromagnetic, infrared, or semiconductor system, apparatus, or component, or a combination of any one of the foregoing. More specific examples (a non-exhaustive list) of the readable storage medium include: an electrical connection having one or more wires, a portable computer diskette, a hard disk, a Random-access Memory (RAM), a read-only memory (ROM), an Erasable Programmable Read-only Memory (EPROM or flash memory), an optical fiber, a portable Compact Disk Read-only Memory (CD-ROM), an optical storage component, a magnetic storage component, or any suitable combination thereof.

The general principles of the present disclosure have been described above in connection with specific embodiments, the advantages, benefits, effects, etc. set forth in the present disclosure are merely example and not limiting, and are not to be construed as necessarily referring to the various embodiments of the present disclosure. In addition, the specific details disclosed above are for the purpose of illustration and ease of understanding, not for limitation, and the above details do not limit the present disclosure to being implemented by necessarily adopting the above-mentioned specific details.

Various modifications and variations to the present disclosure will become apparent to a person skilled in the art without departing from the spirit and scope of the present disclosure. Thus, in case the modifications and variations of the present disclosure are within the scope of the claims and their equivalents, it is intended that the modifications and variations are included in the present disclosure.

## Claims

1. A method of sharing a memory cross operating systems, **characterized by** comprising:
determining (202) a first dynamic buffer area in a first operating system according to a memory sharing message;
determining (204) an address identifier corresponding to the first dynamic buffer area; and
sending (206) the address identifier to a second operating system, wherein the first operating system and the second operating system are in a same integrated circuit.

2. The method according to claim 1, wherein the determining (202) a first dynamic buffer area in a first operating system according to a memory sharing message comprises:
in response to triggering the memory sharing message, determining the first dynamic buffer area by applying for a buffer area from a shared memory framework according to the memory sharing message.

3. The method according to claim 1, wherein the determining (204) an address identifier corresponding to the first dynamic buffer area comprises:
connecting (2041) the first dynamic buffer area with a resource allocation component; and
determining (2042) the address identifier corresponding to the first dynamic buffer area by the resource allocation component.

4. The method according to claim 3, wherein the connecting (2041) the first dynamic buffer area with a resource allocation component comprises:
writing a file descriptor of the first dynamic buffer area into the resource allocation component; and
connecting the resource allocation component with the first dynamic buffer area according to the file descriptor.

5. The method according to claim 4, wherein the determining (2042) the address identifier corresponding to the first dynamic buffer area by the resource allocation component comprises:
acquiring a physical address and a virtual address of the first dynamic buffer area by the resource allocation component; and
determining the address identifier corresponding to the physical address and the virtual address of the first dynamic buffer area by a counter.

6. The method according to claim 4, wherein the determining (2042) the address identifier corresponding to the first dynamic buffer area by the resource allocation component comprises:
acquiring the physical address and the virtual address of the first dynamic buffer area by the resource allocation component; and
determining the address identifier through at least one calculation based on the physical address and/or the virtual address.

7. The method according to any one of claims 1 to 6, further comprising:
receiving (404), by the second operating system, the address identifier; and
accessing (405), according to the address identifier, the first dynamic buffer area in the first operating system.

8. The method according to claim 7, wherein the accessing (405), according to the address identifier, the first dynamic buffer area in the first operating system comprises:
receiving (4051), by the second operating system, the physical address and the virtual address corresponding to the address identifier;
determining (4052), according to the physical address and the virtual address, a position of the first dynamic buffer area in the shared memory framework of the first operating system; and
accessing (4053) the first dynamic buffer area according to the position of the first dynamic buffer area in the shared memory framework of the first operating system.

9. The method according to claim 7, wherein the accessing (405), according to the address identifier, the first dynamic buffer area in the first operating system comprises:
requesting to call buffered data in the first operating system in response to a preset application in the second operating system; and
accessing the first dynamic buffer area according to the matching relationship between the received address identifier and the address identifier corresponding to the first dynamic buffer area, to read the buffered data stored in the first dynamic buffer area.

10. A method of sharing a memory cross operating systems comprising a first operating system and a second operating system integrated on a same integrated circuit, **characterized in that** the method comprises:
in response to the first operating system and/or the second operating system triggering at least one memory sharing message, and
controlling (504) the first operating system to distributively execute the operations performed by the first operating system in the method according to claims 1 to 9 according to the at least one memory sharing message, and/or, controlling the second operating system to distributively execute the operations performed by the first operating system in the method according to claims 1 to 9 according to the at least one memory sharing message.

11. A cross-operating system memory sharing apparatus, **characterized by** comprising:
a buffer area determination module (61) configured to determine a first dynamic buffer area in a first operating system according to a memory sharing message;
an identifier determination module (62) configured to determine an address identifier corresponding to the first dynamic buffer area; and
an identifier sending module (63) configured to send the address identifier to a second operating system, wherein the first operating system and the second operating system are in a same integrated circuit.

12. The apparatus according to claim 11, wherein the identifier determination module (62) comprises:
a component connection unit (621), configured to connect the first dynamic buffer area with a resource allocation component; and
an address identifier unit (622), configured to determine an address identifier corresponding to the first dynamic buffer area by the resource allocation component.

13. An integrated circuit, **characterized by** comprising: a first operating system and a second operating system integrated on the integrated circuit; wherein
the first operating system is configured to, in response to triggering at least one memory sharing message, distributively execute operations performed by the first operating system in the method according to claims 1 to 9 according to the at least one memory sharing message; and
the second operating system is configured to, in response to triggering at least one memory sharing message, distributively execute operations performed by the first operating system in the method according to claims 1 to 9 according to the at least one memory sharing message.

14. A computer-readable storage medium, **characterized by** storing a computer program, which, when executed by a processor, causes the processor to implement the method of sharing a memory cross operating systems according to any one of claims 1 to 10.

15. An electronic device, **characterized by** comprising:
a processor (91);
a memory (92) for storing executable instructions of the processor;
wherein the processor (91) is configured to read the executable instructions from the memory (92) and execute the instructions to implement the method of sharing a memory cross operating systems according to any one of claims 1 to 10.
